# EUROPÄISCHE PATENTSCHRIFT

(11) **EP 1 804 971 B1**
(45) Veröffentlichungstag und Bekanntmachung des Hinweises auf die Patenterteilung: **01.01.2020**
(21) Anmeldenummer: 05796309.2
(22) Anmeldetag: 14.10.2005
(51) Int. Cl.: B01J 49/00

(54) **VERFAHREN ZUM HYGIENISCHEN BETRIEB EINES IONENAUSTAUSCHERS UND IONENAUSTAUSCHERANLAGE**
METHOD FOR THE HYGIENIC OPERATION OF AN ION EXCHANGER AND ION EXCHANGE UNIT
PROCEDE DE FONCTIONNEMENT HYGIENIQUE D'UN ECHANGEUR D'IONS ET UNITE D'ECHANGE D'IONS

(30) Priorität: 20.10.2004 DE 102004051017
(43) Veröffentlichungstag der Anmeldung: 11.07.2007
(73) Patentinhaber: BWT Aktiengesellschaft, 5310 Mondsee (AT)
(72) Erfinder: BERGMANN, Ralph, 69469 Weinheim (DE); JOHANN, Jürgen, A-5310 Mondsee (AT)
(74) Vertreter: Pfiz, Thomas
(86) Internationale Anmeldenummer: PCT/EP2005/011060
(87) Internationale Veröffentlichungsnummer: WO 2006/042702

(56) Entgegenhaltungen:
- WO-A-2005/102920
- DE-A1- 2 431 639
- DE-A1- 3 121 336
- DE-B- 1 235 267
- US-A- 3 585 147
- US-A- 4 113 612

## Beschreibung

Die Erfindung betrifft ein Verfahren zum hygienischen Betrieb eines Ionenaustauschers insbesondere in der Wasseraufbereitung bei welchem der Ionenaustauscher während einer Regenerierphase durch eine Regeneriermittellösung regeneriert wird. Die Erfindung betrifft weiter eine Anlage zur Durchführung des Verfahrens.

lonenaustauscheranlagen werden in großen Stückzahlen als Kationenaustauscher in Wohn- und Bürogebäuden zur Enthärtung von Trinkwasser eingesetzt. Da die Austauschkapazität jedoch endlich ist, muss in regelmäßigen Abständen eine Regeneration erfolgen. Hierfür wird zumeist Natrium- oder Kaliumchlorid, teilweise auch Magnesiumchlorid eingesetzt. Ein Problem von Ionenaustauschern ist deren Neigung zu verkeimen, wobei die Anlage nach zwei Seiten offen ist, nämlich zur Rohwassereingangseite und zum Regenerationsmitteleintrag hin. Ursache der Verkeimung sind Bakterien, die eingangsseitig über das Trinkwasser auf den Ionenaustauscher gebracht werden, diesen besiedeln und wieder an das aufbereitete Wasser abgegeben werden. Daneben erfolgt der Bakterieneintrag über das Regeneriermittel bzw. dessen Bevorratung. Zur Desinfektion wird in der Praxis eine elektrolytische Chlorerzeugung eingesetzt. Chlor hat als Desinfektionsmittel jedoch gravierende Nachteile. Die desinfizierende Wirkung ist vom pH-Wert abhängig und nimmt im alkalischen Bereich über pH = 8 erheblich ab. Zudem kann Chlor mit Wasserinhaltsstoffen bzw. vom Ionenaustauscher abgegebenen organischen Stoffen Geruchs- und Geschmacksstoffe bilden, die die Qualität des enthärteten Wassers negativ beeinträchtigen. Nachteilig ist auch, dass Chlor von einem gegebenenfalls im System gebildeten Biofilm gezehrt wird und nur unzureichend in der Lage ist, vorhandene Biofilme abzubauen..

Das Dokument US 3 585 147 A schlägt ein Verfahren vor, bei dem Chlordioxid ex *situ* erzeugt und dann in wässrige Lösung stabilisiert wird, um ggf. wieder kontrolliert freigesetzt zu werden. Die hochkonzentrierte stabilisierte Chlordioxidlösung wird dadurch hergestellt, dass zunächst Chlordioxidgas in die Lösung eingeleitet wird.

Die DE 12 35 267 B schlägt vor, einen Ionenaustauscher mittels Chlordioxid in einem eigenständigen Prozessschritt zu reinigen. Hierfür wird vorgeschlagen, das Chlordioxid aus Natriumchlorit auf einem in die Wasserstoffform übergeleiteten Kationenaustauscher, der dann als Festsäure anzusprechen ist, zu bilden. Um dies zu ermöglichen, muss der Austauscher zunächst durch Säurebehandlung in die H-Form überführt werden, in der er bereits regeneriert ist. Dabei muss die anzuwendende Menge Natriumchlorit der H-Ionenkapazität des zu behandelnden Austauschers angepasst sein.

Die DE 31 21 336 A1 und DE 24 31 639 A1 offenbaren Elektrolysezellen.

Ausgehend hiervon liegt der Erfindung die Aufgabe zugrunde, die im Stand der Technik aufgetretenen Nachteile zu vermeiden und mit einem einfach handhabbaren System eine desinfizierende Wirkung beim Betrieb von Ionenaustauschern zu erreichen.

Zur Lösung dieser Aufgabe wird die im Patentanspruch 1 bzw. 11 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, Chlordioxid als biocide Substanz über das Regeneriermittel bereitzustellen. Dementsprechend wird in verfahrensmäßiger Hinsicht vorgeschlagen, dass in der Regeneriermittellösung Chlordioxid in situ erzeugt und durch den Ionenaustauscher hindurchgeleitet wird, wobei die chlorithaltige Regeneriermittellösung vor der Durchleitung durch den Ionenaustauscher unter Erzeugung von Chlordioxid elektrolysiert wird. Dadurch ist kein gesonderter Verfahrensschritt notwendig, sondern die Desinfektion kann mit der ohnehin notwendigen Regeneration kombiniert werden. Zugleich wird damit auch einem möglichen Keimeintrag über das Regenerationsmittel entgegengewirkt. Die desinfizierende Wirkung von Chlordioxid ist weitestgehend pH-Wert-unabhängig. Chlordioxid reagiert weniger mit organischen Inhaltsstoffen, und Reaktionen, die Geruchs- und Geschmacksstoffe bilden, sind nicht bekannt. Darüber hinaus baut Chlordioxid auch Biofilme ab. Trotzdem findet keine oxidative Schädigung des Ionenaustauscherharzes statt.

Vorteilhafterweise wird der Regeneriermittellösung eine ein Erdalkali- oder Alkalichlorit als Chloritkomponente zudosiert. Die Chloritkomponente ist das Edukt für die anschließende Chlordioxid-produzierende Elektrolysereaktion. Speziell ist es von Vorteil, wenn die durch eine Kochsalzlösung gebildete Regeneriermittellösung mit Natriumchloritlösung beaufschlagt wird. Besonders bevorzugt wird einer Kochsalzsole als Regeneriermittel eine Natriumchloritlösung so zudosiert, dass eine Natriumchloritkonzentration in der Kochsalzsole von 1 bis 5 g/l resultiert.

Eine weitere vorteilhafte Ausführung sieht vor, dass die Regeneriermittellösung in einem mit dem Ionenaustauscher verbindbaren Reservoir vorzugsweise in regelmäßigen Zeitintervallen mit einer Chloritkomponente, insbesondere Natriumchlorit versetzt wird. Durch die allein mit diesem Zweikomponentensystem bewirkte Chlordioxidbildung kann auch eine Verkeimung des Reservoirs verhindert werden.

Gemäß einer weiteren vorteilhaften Maßnahme wird die Chloritkomponente als wässrige Lösung vorzugsweise über ein T-Stück einer Regeneriermittelleitung in die Regeneriermittellösung eingeleitet.

Hierbei ist es günstig, wenn die chlorithaltige Regeneriermittellösung in einer Durchflusszelle zwischen zwei Elektroden unter Gleichspannung elektrolysiert wird und die Gleichspannung in vorgegebenen Intervallen, vorzugsweise in aufeinanderfolgenden Regenerierphasen umgepolt wird. Auf diese Weise können nachteilige Oberflächeneffekte an den Elektroden vermieden werden.

Eine für die Durchführung des erfindungsgemäßen Verfahrens geeignete Anlage, welche ein über eine Leitung mit dem Ionenaustauscher verbindbaren Reservoir zur Zuführung von Regeneriermittel aufweist, zeichnet sich durch einen Vorrat aus, aus dem das Reservoir oder die Leitung mit einer Chloritkomponente beaufschlagbar ist. Dadurch entfallen gesonderte Desinfektionsschritte und aufwändige apparative Einrichtungen. Bevorzugt wird die Chloritkomponente durch ein Erdalkali- oder Alkalichlorit gebildet.

Eine weitere Verbesserung wird dadurch erzielt, dass die Chloritkomponente in wässriger Lösung, vorzugsweise als Natriumchloritlösung über eine Pumpe in die Leitung oder das Reservoir zudosierbar ist. Die Chlordioxiderzeugung in dem Reservoir erfolgt dabei ohne zusätzlich Oxidationsmittel oder Säuren, so dass kein besonderes Gefährdungspotential besteht.

Zur gezielten Chlordioxiderzeugung bei der Regeneriermittelbeaufschlagung des Austauschers ist es günstig, wenn in der Leitung eine Durchfluss-Elektrolysezelle für die chlorithaltige Regeneriermittellösung angeordnet ist. Dabei ist es von besonderem Vorteil, wenn die Durchfluss-Elektrolysezelle zwei umströmte Elektrodenstifte, vorzugsweise platinierte Titanstifte aufweist.

Zur vorteilhaften Steuerung des Betriebsablaufs ist in der Leitung ein Absperrventil zur Absperrung gegenüber dem Ionenaustauscher angeordnet.

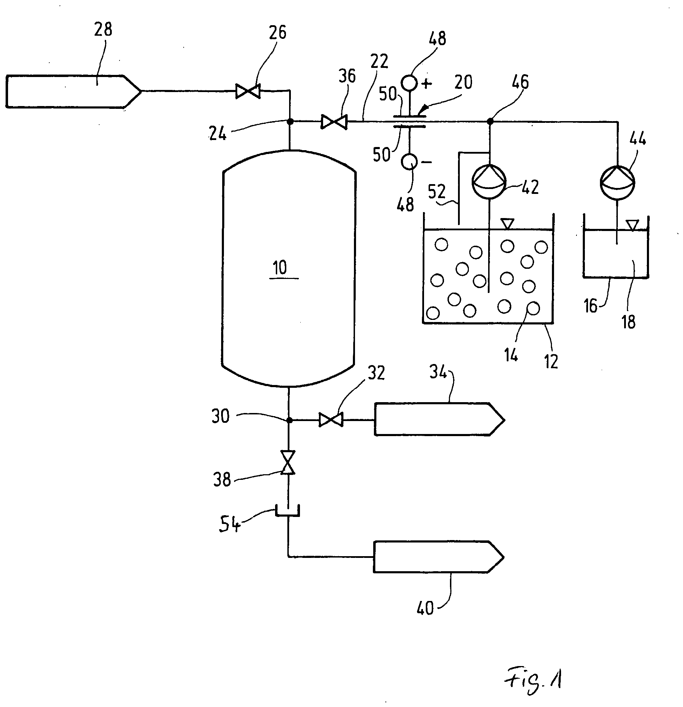

Im Folgenden wird die Erfindung anhand eines in der Zeichnung dargestellten Ausführungsbeispiels näher erläutert. Die einzige Figur zeigt ein schematisch vereinfachtes Anlagenschema einer Ionenaustauscheranlage mit Chlordioxid-Desinfektion.

Die dargestellte Ionenaustauscheranlage besteht im wesentlichen aus einem Ionenaustauscher 10, einem Reservoir 12 für Regeneriermittel 14, einem Vorrat 16 für Natriumchloritlösung 18 und einer Elektrolysezelle 20 in einer Verbindungsleitung 22 zwischen Reservoir 12 bzw. Vorrat 16 und Ionenaustauscher 10.

Der Ionenaustauscher 10 ist im Normalbetrieb an seinem Eingang 24 über ein Einlassventil 26 mit einem Rohwassereinlass 28 und an seinem Ausgang 30 über ein Auslassventil 32 mit einem Weichwasserauslass 34 verbunden.

Für den Regenerierbetrieb ist der Eingang 24 über das Ventil 36 mit der Verbindungsleitung 22 und der Ausgang 30 über das Ventil 38 mit einem Abwasserauslass 40 verbindbar, während die Ventile 26, 32 in dieser Phase geschlossen sind.

Die Zudosierung der Lösungen 14, 18 erfolgt durch Pumpen 42, 44, deren Ausgänge über ein T-Stück 46 gemeinsam in die Verbindungsleitung 22 münden.

Die Elektrolysezelle 20 ist mit ihren Spannungsanschlüssen 48, 50 an eine umpolbare Gleichspannungsquelle anschließbar. Die Elektroden 50 sind aus zylindrischen platinierten Titanstiften gebildet, die im Abstand parallel zueinander in einen Durchflussbereich ragen.

Im Normalbetrieb sind die Ventile 26,32 offen und die Ventile 36, 38 geschlossen. Das Rohwasser durchströmt unter Druck von den Ionenaustauscherbehälter 10 von oben nach unten. Dabei werden an der Oberfläche des Kationenaustauschers im Wasser enthaltene Calcium- und Magnesiumkationen gegen Natriumionen ausgetauscht, um so am Auslass 34 Weichwasser zapfen zu können und Kalkausfällung in der nachgeordneten Rohrleitungsinstallation und den Armaturen zu minimieren.

Ist die Austauschkapazität des Ionenaustauschers 10 erschöpft, wird durch eine Steuerung eine Regeneration ausgelöst, indem die Ventile 26,32 geschlossen und die Ventile 36, 38 geöffnet werden. Die Pumpe 42 fördert das durch gesättigte Kochsalzsole (NaCI-Lösung) gebildete Regeneriermittel 14 in die Leitung 22, während die Pumpe 44 eine 30%-ige Natriumchloritlösung 18 (NaClO₂-Lösung) zu Desinfektionszwecken über das T-Stück 46 zumischt, so dass eine Natriumchloritkonzentration in der Kochsalzsole von 1 bis 5 g/l resultiert. Nachfolgend wird diese Mischungslösung im Durchfluss durch die Elektrolysezelle 20 elektrolysiert. Hierbei sind folgende Oxidations-Reaktionen mit den folgenden Standardoxidationspotentialen an der Anode möglich:

| | |
|---|---|
| Cl⁻ + H₂O -> HClO + H⁺ + 2 e⁻ | - 1, 49 V |
| ClO₂- -> ClO₂ (aq) + e⁻ | - 0,954 V |

Die Reaktion an der Kathode ist die Reduktion der Protonen:

H⁺ + e⁻ -> ½ H₂

Da das Standardoxidationspotential des Chloritanions niedriger ist als das des Chloridanions, wird das Chloritanion zuerst oxidiert und es bildet sich nahezu ausschließlich Chlordioxid, welches sich vollständig in der Kochsalzsole löst. Die Bildung des Wasserstoffs ist an der Gasbildung erkennbar. Aufgrund der Verfahrensführung ist der Umsatz an den Elektroden jedoch gering, so dass die Gasbildung nicht störend ist.

Die chlordioxidhaltige Kochsalzsole kann gemäß folgendem Beispiel erzeugt werden:
Es wird eine 8%-ige Kochsalzsole, welche 1 g/l Natriumchlorit enthält, durch eine Durchflusselektrolysezelle geleitet. Unter den folgenden Randbedingungen werden mindestens 2 mg/l Chlordioxid erzeugt:
- Volumenstrom der Natriumchlorithaltigen Kochsalzsole durch die Elektrolysezelle: 6 l/min
- Elektroden: 2 zylindrische platinierte Titanstifte der Länge 20 mm in 5 mm Abstand
- Verweilzeit der Lösung an den Elektroden ca. 0,03s
- Elektrolysespannung: 18 V Gleichspannung
- Stromfluss 5 A.

Das gebildete Chlordioxid wird als keimtötendes Mittel in der Mischungslösung über das lonenaustauschermaterial geleitet. Zur Entsorgung wird die Regeneriermittellösung über den Abwasserauslass 40 abgeleitet. Um Ablagerungen auf den Elektroden 50 zu vermeiden, kann die Spannungsquelle in aufeinanderfolgenden Regenerierintervallen umgepolt werden.

Am Ende einer jeden Regenerierphase erfolgt eine Nachspülung des Austauschers 10 und eine Wassernachspeisung in das Reservoir 12. Zu diesem Zweck wird neben den Ventilen 36, 38 auch das Einlassventil 26 geöffnet. Das Rohwasser verdrängt die Regenerationslösung und wäscht den Ionenaustauscher 10. Gleichzeitig wird über den Bypass 52 wieder Wasser in das Reservoir 12 geleitet, um das bei der Regeneration verbrauchte Volumen zu ersetzen. Die Kochsalzsole wird selbsttätig aus Kochsalztabletten gebildet, die sich in dem Reservoir 12 befinden.

Um auch eine Verkeimung des Regeneriermittels 14 zu verhindern, kann mittels der Dosierpumpe 44 Natriumchloritlösung in das Reservoir 14 zudosiert werden. Dadurch entsteht auch ohne elektrolytische Reaktionsbeschleunigung Chlordioxid als desinfizierendes Agens im Reservoir 12.

Durch Zudosierung eines Reduktionsmittels (z.B. Natriumsulfit) in das Regenerationsabwasser kann der Austrag von Chlorit oder Chlordioxid vermieden werden. Zu diesem Zweck ist es auch denkbar, das Regenerationsabwasser über eine Feststoffschüttung 54 aus Calciumsulfit abzuleiten. Alternativ dazu kann dem Verdrängungswasser Natriumsulfit zudosiert werden, so dass überschüssiges Chlorit bzw. Chlordioxid schon nach Abschluss der Desinfektion im lonenaustauschermaterial zu Chlorid reduziert wird.

Wie nachfolgend ausgeführt, konnte die gewünschte Desinfektionswirkung in einem Vergleichsversuch nachgewiesen werden.

In einer Zweisäulen-Haushalts-Enthärtungsanlage mit jeweils 4,7 I stark saurem Kationenaustauscher wurden beide Säulen mit 100 ml 10E7/ml KBE E. coli kontaminiert. 24 Stunden später wurde die erste Säule mit elektrolytisch erzeugtem Chlor als desinfizierend wirkendem Agens regeneriert. Der Stromfluss in der Elektrolysezelle betrug 0,6 bis 0,7A, wobei 0,5 bis 0,6 mg/l freies Chlor im Regenerationsabwasser bestimmt wurden.

Die zweite Säule wurde mit elektrolytisch erzeugtem Chlordioxid als desinfizierend wirkendem Agens regeneriert. Der Stromfluss in der Elektrolysezelle betrug 0,6 bis 0,7 A, und es wurden 0,5 bis 0,6 mg/l freies Chlordioxid im Regenerationsabwasser bestimmt.

Die Verkeimung mit E. coli wurde als KBE/ml und KBE/100 ml im Ablauf des Wassers in den angegebenen Zeitabständen direkt nach der Regeneration ermittelt. Der Wasserdurchfluss durch die Anlage lag bei 120 l/h. In der folgenden Tabelle bedeutet "bewachsen" mehr als 2000 KBE/100. Die Ergebnisse zeigen die Überlegenheit von Chlordioxid als Desinfektionsmittel gegenüber herkömmlich eingesetztem Chlor.

| Zeit min | Chlor KBE/ml | Chlor KBE/100 ml | Chlordioxid KBE/ml | Chlordioxid KBE/100 ml |
|---|---|---|---|---|
| 0,5 | 10 | bewachsen | 0 | 0 |
| 1 | 10 | bewachsen | 0 | 7 |
| 2 | 5 | bewachsen | 0 | 4 |
| 10 | 1 | 92 | 0 | 0 |

Zusammenfassend ist folgendes festzuhalten: Die Erfindung betrifft ein Verfahren und eine dafür geeignete Anlage zum hygienischen Betrieb eines Ionenaustauschers 10 in der Wasseraufbereitung, wobei der Ionenaustauscher 10 während einer Regenerierphase durch eine Regeneriermittellösung 14 regeneriert wird. Um zugleich eine desinfizierende Wirkung zu erzielen, wird in der Regeneriermittellösung 14 Chlordioxid in situ erzeugt und durch den Ionenaustauscher 10 hindurchgeleitet.

## Patentansprüche

1. Verfahren zum hygienischen Betrieb eines Ionenaustauschers (10) insbesondere in der Wasseraufbereitung bei welchem der Ionenaustauscher (10) während einer Regenerierphase durch eine Regeneriermittellösung (14) regeneriert wird, **dadurch gekennzeichnet, dass** in der Regeneriermittellösung (14) Chlordioxid in situ erzeugt und durch den Ionenaustauscher (10) hindurchgeleitet wird, wobei der Regeneriermittellösung (14) eine Chloritkomponente (18) zudosiert wird, und wobei die chlorithaltige Regeneriermittellösung (14) vor der Durchleitung durch den Ionenaustauscher (10) unter Erzeugung von Chlordioxid elektrolysiert wird.

2. Verfahren nach Anspruch 1, **dadurch gekennzeichnet, dass** der Regeneriermittellösung (14) ein Erdalkali- oder Alkalichlorit als Chloritkomponente (18) zudosiert wird.

3. Verfahren nach Anspruch 1 oder 2, **dadurch gekennzeichnet, dass** die durch eine Kochsalzlösung gebildete Regeneriermittellösung (14) mit Natriumchloritlösung (18) beaufschlagt wird.

4. Verfahren nach einem der Ansprüche 1 bis 3, **dadurch gekennzeichnet, dass** einer Kochsalzsole (14) eine Natriumchloritlösung (18) so zudosiert wird, dass eine Natriumchloritkonzentration in der Kochsalzsole von 1 bis 5 g/l resultiert.

5. Verfahren nach einem der Ansprüche 1 bis 4, **dadurch gekennzeichnet, dass** die Regeneriermittellösung (14) in einem mit dem Ionenaustauscher (10) verbindbaren Reservoir (12) vorzugsweise in regelmäßigen Zeitintervallen mit einer Chloritkomponente (18), insbesondere Natriumchlorit versetzt wird.

6. Verfahren nach einem der Ansprüche 1 bis 5, **dadurch gekennzeichnet, dass** die Chloritkomponente (18) als wässrige Lösung vorzugsweise über ein T-Stück (46) einer Regeneriermittelleitung (22) in die Regeneriermittellösung (14) eingeleitet wird.

7. Verfahren nach einem der Ansprüche 1 bis 6, **dadurch gekennzeichnet, dass** die chlorithaltige Regeneriermittellösung (14) in einer Durchflusszelle (20) zwischen zwei Elektroden (50) unter Gleichspannung elektrolysiert wird, und dass die Gleichspannung in vorgegebenen Intervallen, vorzugsweise in aufeinanderfolgenden Regenerierphasen umgepolt wird.

8. Verfahren nach einem der Ansprüche 1 bis 7, **dadurch gekennzeichnet, dass** der aus dem Ionenaustauscher (10) abgeleiteten Regeneriermittellösung (14) ein Reduktionsmittel, insbesondere Natriumsulfit zudosiert wird.

9. Verfahren nach einem der Ansprüche 1 bis 8, **dadurch gekennzeichnet, dass** die Regeneriermittellösung (14) über eine dem Ionenaustauscher (10) nachgeordnete, vorzugsweise durch Calciumsulfit gebildete Feststoffschüttung (54) abgeleitet wird.

10. Verfahren nach einem der Ansprüche 1 bis 9, **dadurch gekennzeichnet, dass** am Ende der Regenerierphase Wasser zur Verdrängung von Regeneriermittel durch den Ionenaustauscher (10) hindurchgeleitet wird, und dass dem Verdrängungswasser ein Reduktionsmittel, insbesondere Natriumsulfit zudosiert wird.

11. Ionenaustauscheranlage mit einem mit Rohwasser durchströmbaren Ionenaustauscher (10) zur Gewinnung von Weichwasser und einem über eine Leitung (22) mit dem Ionenaustauscher (10) verbindbaren Reservoir (12) zur Zuführung von Regeneriermittel während einer Regenerierphase, **gekennzeichnet durch** einen Vorrat (16), aus dem das Reservoir (12) oder die Leitung (22) mit einer Chloritkomponente (18) beaufschlagt ist, wobei in der Leitung (22) eine Durchfluss-Elektrolysezelle (20) für die chlorithaltige Regeneriermittellösung (14) angeordnet ist und in dem Regeneriermittel Chlordioxid in situ erzeugt und durch den Ionenaustauscher (10) hindurchgeleitet wird.

12. Ionenaustauscheranlage nach Anspruch 11, **dadurch gekennzeichnet, dass** die Chloritkomponente (18) ein Erdalkali- oder Alkalichlorit ist.

13. Ionenaustauscheranlage nach Anspruch 11 oder 12, **dadurch gekennzeichnet, dass** die Chloritkomponente (18) in wässriger Lösung, vorzugsweise als Natriumchloritlösung über eine Pumpe (44) in die Leitung (22) oder das Reservoir (12) zudosierbar ist.

14. Ionenaustauscheranlage nach einem der Ansprüche 11 bis 13, **dadurch gekennzeichnet, dass** die Durchfluss-Elektrolysezelle (20) zwei umströmte Elektrodenstifte (50), vorzugsweise platinierte Titanstifte aufweist.

15. Ionenaustauscheranlage nach einem der Ansprüche 11 bis 14, **dadurch gekennzeichnet, dass** in der Leitung (22) ein Absperrventil (36) zur Absperrung gegenüber dem Ionenaustauscher (10) angeordnet ist.

## Claims

1. Method for hygienic operation of an ion exchanger (10), particularly in water treatment, in which the ion exchanger (10) is regenerated by means of a regeneration agent solution (14) during a regeneration phase, **characterized in that** chlorine dioxide is generated in situ in the regeneration agent solution (14) and passed through the ion exchanger (10), wherein a chlorite component (18) is metered into the regeneration agent solution (14), and wherein the regeneration agent solution (14) that contains chlorite is electrolyzed before being passed through the ion exchanger 10, thereby producing chlorine dioxide.

2. Method according to claim 1, **characterized in that** an earth alkali chlorite or alkali chlorite as a chlorite component (18) is metered into the regeneration agent solution (14).

3. Method according to claim 1 or 2, **characterized in that** the regeneration agent solution (14) formed by a saline solution has sodium chlorite solution (18) applied to it.

4. Method according to one of claims 1 to 3, **characterized in that** a sodium chlorite solution (18) is metered into a saline brine (14) in such a manner that a sodium chlorite concentration in the saline brine of 1 to 5 g/l results.

5. Method according to one of claims 1 to 4, **characterized in that** the regeneration agent solution (14) is mixed with a chlorite component (18), particularly sodium chlorite, preferably at regular time intervals, in a reservoir (12) that can be connected with the ion exchanger (10).

6. Method according to one of claims 1 to 5, **characterized in that** the chlorite component (18) is introduced into the regeneration agent solution (14) as an aqueous solution, preferably by way of a T-piece (46) of a regeneration agent line (22).

7. Method according to one of claims 1 to 6, **characterized in that** the regeneration agent solution (14) containing chlorite is electrolyzed in a flow-through cell (20) between two electrodes (50), under direct voltage, and that the direct voltage has its poles reversed at pre-determined intervals, preferably in consecutive regeneration phases.

8. Method according to one of claims 1 to 7, **characterized in that** a reduction agent, particularly sodium sulfite, is metered into the regeneration agent solution (14) passed out of the ion exchanger (10).

9. Method according to one of claims 1 to 8, **characterized in that** the regeneration agent solution (14) is passed away by way of a solid bed (54), preferably formed by calcium sulfite, that follows the ion exchanger (10).

10. Method according to one of claims 1 to 9, **characterized in that** at the end of the regeneration phase, water for displacement of regeneration agent is passed through the ion exchanger (10), and that a reduction agent, particularly sodium sulfite, is metered into the displacement water.

11. Ion exchanger system having an ion exchanger (10) through which untreated water can flow, for obtaining soft water, and a reservoir (12) that can be connected with the ion exchanger (10), by way of a line (22), for feeding regeneration agent back during a regeneration phase, **characterized by** a supply (16), from which the reservoir (12) or the line (22) is charged with a chlorite component (18), wherein a flow-through cell (20) for the regeneration agent solution (14) that contains chlorite is disposed in the line (22), and chlorine dioxide is generated in situ in the regeneration agent and passed through the ion exchanger (10).

12. Ion exchanger system according to claim 11, **characterized in that** the chlorite component (18) is an earth alkali chlorite or alkali chlorite.

13. Ion exchanger system according to claim 11 or 12, **characterized in that** the chlorite component (18) can be metered into the line (22) or the reservoir (12) by way of a pump (44), in aqueous solution, preferably as a sodium chlorite solution.

14. Ion exchanger system according to one of claims 11 to 13, **characterized in that** the flow-through electrolysis cell (20) has two electrode pins (50), preferably platinum-plated titanium pins.

15. Ion exchanger system according to one of claims·11 to 14, **characterized in that** a shut-off valve (36) for a shut-off with regard to the ion exchanger (10) is disposed in the line (22).

## Revendications

1. Procédé pour le fonctionnement hygiénique d'un échangeur d'ions (10), en particulier dans le traitement de l'eau, dans lequel l'échangeur d'ions (10) est régénéré pendant une phase de régénération par une solution d'agent de régénération (14), **caractérisé en ce que** du dioxyde de chlore est généré in situ dans la solution d'agent de régénération (14) et guidé à travers l'échangeur d'ions (10), un composant à base de chlorite (18) étant dosé dans la solution d'agent de régénération (14) et la solution d'agent de régénération (14) contenant du chlorite étant électrolysée avec génération de dioxyde de chlore avant le passage à travers l'échangeur d'ions (10).

2. Procédé selon la revendication 1, **caractérisé en ce qu'**un chlorite de métal alcalino-terreux ou de métal alcalin est dosé en tant que composant à base de chlorite (18) dans la solution d'agent de régénération (14).

3. Procédé selon la revendication 1 ou 2, **caractérisé en ce que** la solution d'agent de régénération (14) formée par une solution de chlorure de sodium est chargée par une solution de chlorite de sodium (18).

4. Procédé selon l'une quelconque des revendications 1 à 3, **caractérisé en ce qu'**une solution de chlorite de sodium (18) est dosée dans un sol de chlorure de sodium (14) de manière telle qu'on obtient une concentration en chlorite de sodium de 1 à 5 g/l dans le sol de chlorure de sodium.

5. Procédé selon l'une quelconque des revendications 1 à 4, **caractérisé en ce que** la solution d'agent de régénération (14) est additionnée, dans un réservoir (12) pouvant être relié à l'échangeur d'ions (10), de préférence à des intervalles de temps réguliers, d'un composant à base de chlorite (18), en particulier de chlorite de sodium.

6. Procédé selon l'une quelconque des revendications 1 à 5, **caractérisé en ce que** le composant à base de chlorite (18) est introduit sous forme de solution aqueuse, de préférence via un raccord en T (46) d'une conduite à agent de régénération (22), dans la solution d'agent de régénération (14).

7. Procédé selon l'une quelconque des revendications 1 à 6, **caractérisé en ce que** la solution d'agent de régénération (14) contenant du chlorite est électrolysée dans une cellule à écoulement (20) entre deux électrodes (50) sous une tension continue et **en ce que** la polarité de la tension continue est inversée à des intervalles de temps prédéfinis, de préférence dans des phases de régénération successives.

8. Procédé selon l'une quelconque des revendications 1 à 7, **caractérisé en ce qu'**un agent de réduction, en particulier du sulfite de sodium, est dosé dans la solution d'agent de régénération (14) soutirée de l'échangeur d'ions (10).

9. Procédé selon l'une quelconque des revendications 1 à 8, **caractérisé en ce que** la solution d'agent de régénération (14) est soutirée via un matériau en vrac solide (54), de préférence formé par du sulfite de calcium, disposé en aval de l'échangeur d'ions (10).

10. Procédé selon l'une quelconque des revendications 1 à 9, **caractérisé en ce qu'**à la fin de la phase de régénération, de l'eau est guidée à travers l'échangeur d'ions (10) pour déplacer l'agent de régénération et **en ce qu'**un agent de réduction, en particulier du sulfite de sodium, est dosé dans l'eau de déplacement.

11. Installation d'échangeur d'ions présentant un échangeur d'ions (10) pouvant être traversé par de l'eau brute pour obtenir de l'eau adoucie et un réservoir (12) pouvant être relié via une conduite (22) à l'échangeur d'ions (10) pour alimenter l'agent de régénération pendant une phase de régénération, **caractérisée par** une réserve (16), à partir de laquelle le réservoir (12) ou la conduite (22) est chargé(e) par un composant à base de chlorite (18), une cellule d'électrolyse à écoulement (20) pour la solution d'agent de régénération (14) contenant du chlorite étant disposée dans la conduite (22) et du dioxyde de chlore étant produit in situ dans l'agent de régénération et guidé à travers l'échangeur d'ions (10).

12. Installation d'échangeur d'ions selon la revendication 11, **caractérisée en ce que** le composant à base de chlorite (18) est un chlorite de métal alcalino-terreux ou de métal alcalin.

13. Installation d'échangeur d'ions selon la revendication 11 ou 12, **caractérisée en ce que** le composant à base de chlorite (18) peut être dosé en solution aqueuse, de préférence sous forme de solution de chlorite de sodium, via une pompe (44) dans la conduite (22) ou dans le réservoir (12).

14. Installation d'échangeur d'ions selon l'une quelconque des revendications 11 à 13, **caractérisée en ce que** la cellule d'électrolyse à écoulement (20) présente deux tiges d'électrode (50) traversées par un courant, de préférence des tiges en titane revêtues de platine.

15. Installation d'échangeur d'ions selon l'une quelconque des revendications 11 à 14, **caractérisée en ce qu'**une soupape d'arrêt (36) est disposée dans la conduite (22) pour une fermeture par rapport à l'échangeur d'ions (10).
